# EUROPÄISCHE PATENTSCHRIFT

(11) **EP 3 248 769 B1**
(45) Veröffentlichungstag und Bekanntmachung des Hinweises auf die Patenterteilung: **28.10.2020**
(21) Anmeldenummer: 17158114.3
(22) Anmeldetag: 27.02.2017
(51) Int. Cl.: B29D 30/24, B29D 30/26

(54) **VERFAHREN ZUR HERSTELLUNG EINES FAHRZEUGREIFENS**
METHOD FOR PRODUCING A TYRE FOR A VEHICLE
PROCÉDÉ DE FABRICATION D'UN PNEU DE VÉHICULE

(30) Priorität: 25.05.2016 DE 102016209142
(43) Veröffentlichungstag der Anmeldung: 29.11.2017
(73) Patentinhaber: Continental Reifen Deutschland GmbH, 30165 Hannover (DE)
(72) Erfinder: Kastens, Sven, 30890 Barsinghausen (DE); Ernst, Gerald, 35099 Burgwald 3 (DE); Sewerin, Josef, 34508 Willingen (DE); Holitzner, Matthias, 31558 Hagenburg (DE)
(74) Vertreter: Widjaja, Wira

(56) Entgegenhaltungen:
- WO-A1-2010/064084
- DE-A1-102007 031 091
- DE-A1-102013 103 632
- JP-A- 2002 234 081
- JP-U- S60 109 922
- US-A- 5 066 354

## Beschreibung

Die Erfindung betrifft ein Verfahren zur Herstellung eines Fahrzeugreifens.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht bzw. Reifeninnenlage und die Einlagen als breite Materiallagen auf einer Reifenaufbautrommel angeordnet werden. Anschließend wird der Wulstkern auf die Einlage gesetzt und das Einlagenende um den Kern herumgeschlagen. Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut. Eine solche Karkasstrommel ist in der Regel relativ komplex aufgebaut.

Die DE 10 2013 103632 A1, DE 10 2007 031091 A1 und JP S60 109922 U offenbaren bekannte Verfahren zur Herstellen von Fahrzeugreifen.

Der Erfindung liegt die Aufgabe zugrunde, ein verbessertes Verfahren zur Herstellung von Fahrzeugreifen bereitzustellen.

Gelöst wird die Aufgabe gemäß Anspruch 1 dadurch, dass ein Verfahren mit folgenden Schritten eingesetzt wird:
a) Positionierung einer Karkasstrommel in einer ersten Wickelposition vor einem ersten Servicer zum Auflegen einer Reifeninnenlage an einer Karkass-Station,
   wobei die Karkasstrommel umlaufend mit einer Vielzahl von einzelnen Trommelsegmenten ausgerüstet ist,
   wobei alle Trommelsegemente an der Außenseite mit einer umlaufenden flexiblen Gummimanschette überdeckt sind
   und wobei die Außenseite der Gummimanschette in einem schmalen Teilbereich mit mindestens einem Haftungsblech mit einer glatten Oberfläche überdeckt ist,
   wobei das Haftungsblech an einem der Trommelsegmente montiert ist,
b) Positionierung des vorderen Endes des ersten Servicers mit der Reifeninnenlage an der Karkasstrommel,
   wobei die Oberseite des Haftungsbleches gegenüberliegend zum vorderen Ende der Reifeninnenlage positioniert wird,
c) Andrücken des vorderen Endes der Reifeninnenlage an die Oberseite des Haftungsbleches,
   wobei das Anhaften der Reifeninnenlage an das Haftungsblech durch die glatte Oberfläche des Haftungsbleches unterstützt wird,
d) Rotieren der Karkasstrommel,
   wobei das Aufwickeln der Reifeninnenlage mit der Karkasstrommel erfolgt,
e) Positionierung und Zusammensetzen des hinteren Endes der Reifeninnenlage auf die Oberseite des vorderen Endes der Reifeninnenlage auf der Karkasstrommel,
f) Aufwickeln von weiteren Reifenbauteilen auf die Karkasstrommel,
g) Einfahren aller Trommelsegmente in radialer Richtung,
   wobei sich der Trommeldurchmesser der Karkasstrommel verkleinert und
   wobei mit den Trommelsegmenten und eine Antihaft-Wirkung der Gummimanschette das Ablösen der Innenseite der Reifeninnenlage von der Außenseite der Gummimanschette unterstützt wird,
h) Abnahme der Reifenkarkasse von der Karkasstrommel,
i) Zusammensetzen der Reifenkarkasse mit einem Gürtel-Laufstreifenpaket an einer Bombiertrommel,
j) Fertigstellen des Fahrzeugreifens mit weiteren Schritten.

Ein Vorteil der Erfindung ist insbesondere darin zu sehen, dass durch das Verfahren die Reifeninnenlage mit einer hohen Präzision auf die Karkasstrommel aufgewickelt werden kann. Die Reifeninnenlage wird mit dem Servicer insb. von unten an die Karkasstrommel angelegt, damit die Reifeninnenlage mit einer hohen Genauigkeite aufgewickelt werden kann.

Das vordere Ende der Reifeninnenlage wird mit dem Servicer gegen die Außenseite des Haftungsbleches gedrückt. Mit dem Haftungsblech mit der glatten Oberseite wird überraschenderweise eine sehr gute Haftwirkung gegenüber dem Gummimaterial der Reifeninnenlage erreicht. Diese Haftwirkung ist notwendig, um die Reifeninnenlage mit einer hohen Präzision auf die Oberseite der Karkasstrommel aufzuwickeln. Bei einer herkömmlichen Karkasstrommel müsste hingegen z. B. die entsprechende Stelle der Gummimanschette z. B. aufgerauht werden, um eine Haftwirkung gegenüber Gummimaterial zu erreichen.

Alle Trommelsegmente sind mit einer Gummimanschette in Umfangsrichtung überspannt. Vor der Abnahme der Reifenkarkasse von der Karkasstrommel werden alle Trommelsegmente in radialer Richtung eingefahren. Bei diesem Vorgang zieht sich ebenfalls die Gummimanschette zusammen, wodurch das Ablösen der Innenseite der Reifeninnenlage von der Karkasstrommel wesentlich unterstützt wird.

In einer vorteilhaften Weiterbildung der Erfindung ist vorgesehen, dass bei Schritt b) das Anlegen der Reifeninnenlage an der Unterseite der Karkasstrommel erfolgt.

Dadurch kann das vordere Ende der Reifeninnenlage mit einer höheren Präzision an die Karkasstrommel angelegt werden.

In einer weiteren vorteilhaften Weiterbildung der Erfindung ist vorgesehen, dass das Haftungsblech in beiden Randbereichen von einem Trommelsegment in jeweils einer Nut fixiert wird.

Dadurch kann das Haftungsblech auf einfache und sichere Weise am Trommelsegment fixiert werden.

In einer weiteren vorteilhaften Weiterbildung der Erfindung ist vorgesehen, dass bei Schritt b) die Reifeninnenlage mit einem schräg geschnittenen Endabschnitt an die Karkasstrommel angelegt wird.

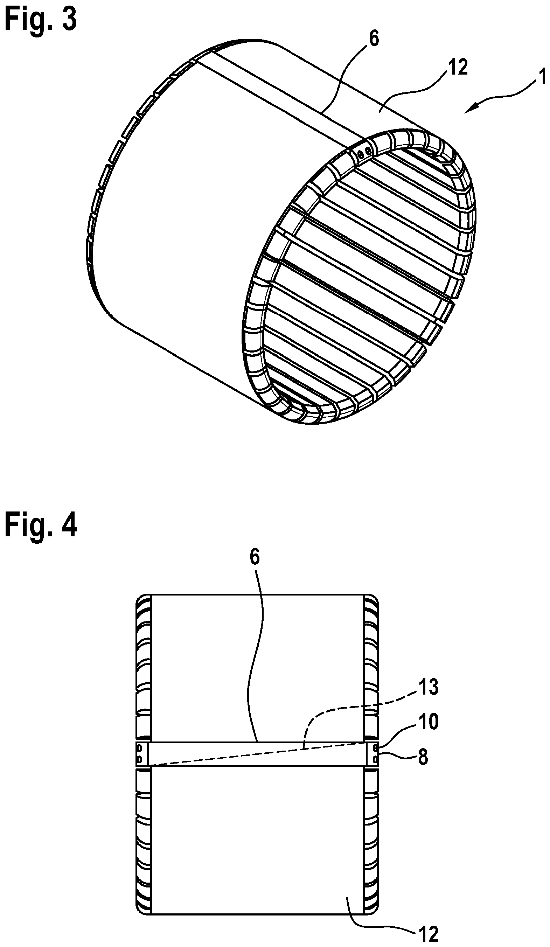

Der schräg geschnittene Endabschnitt ist schematisch in der Figur 4 dargestellt. Mit dem schräg geschnittenen Endabschnitt wird das Zusammensetzen beider Enden der Reifeninnenlage auf der Karkasstrommel verbessert.

In einer weiteren vorteilhaften Weiterbildung der Erfindung ist vorgesehen, dass das Haftungsblech in beiden Randbereichen von einem Trommelsegment mit seitlich angeordneten Schrauben fixiert wird.

Dadurch lässt sich das Haftungsblech auf einfache Weise am Trommelsegment fixieren.

In einer weiteren vorteilhaften Weiterbildung der Erfindung ist vorgesehen, dass das Haftungsblech in der Aufsicht im Wesentlichen rechteckförmig ausgebildet ist,
wobei das Haftungsblech in Umfangsrichtung der Karkasstrommel im Wesentlichen die gleiche Breite aufweist wie die Breite der Trommelsegmente in Umfangsrichtung der Karkasstrommel.

Ein Ausführungsbeispiel für ein rechteckförmiges Haftungsblech ist in den Figuren 3 und 4 dargestellt.

In einer weiteren vorteilhaften Weiterbildung der Erfindung ist vorgesehen, dass das Haftungsblech in der Aufsicht im Wesentlichen sechseckförmig ausgebildet ist, wobei das Haftungsblech in Umfangsrichtung der Karkasstrommel schräg verlaufende Kanten aufweist.

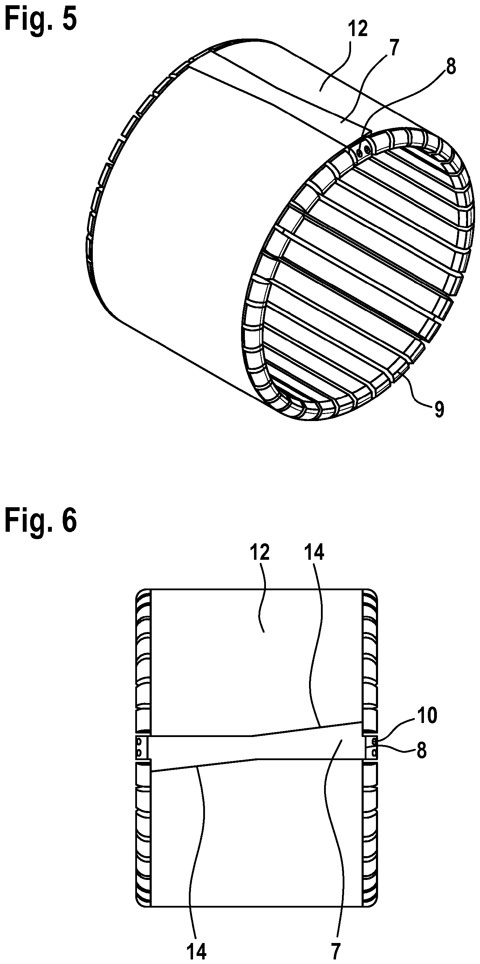

Ein Ausführungsbeispiel für ein sechseckförmiges Haftungsblech ist in den Figuren 5 und 6 dargestellt. Die Form des Haftungsbleches hat insbesondere den Vorteil, dass das vordere Ende der Reifeninnenlage mit einem schrägen Endabschnitt optimal an die Oberseite des Haftungsbleches angelegt werden kann.

In einer weiteren vorteilhaften Weiterbildung der Erfindung ist vorgesehen, dass das Haftungsblech eine Blechdicke von ca. 0,5 bis 1,5 cm aufweist.

Dadurch lässt sich das Haftungsblech auf einfache Weise herstellen und an das jeweilige Trommelsegment anpassen.

Anhand eines Ausführungsbeispieles soll die Erfindung näher erläutert werden. Es zeigt:
- Fig. 1:: ein Ausführungsbeispiel des Verfahrens
- Fig. 2:: die Karkasstrommel in der Seitenansicht
- Fig. 3:: die Karkasstrommel in einer dreidimensionalen Ansicht
- Fig. 4:: die Karkasstrommel in einer Ansicht von vorne
- Fig. 5:: eine Karkasstrommel mit einem sechsförmigen Haftungsblech
- Fig. 6:: die Karkasstrommel in einer Ansicht von vorne

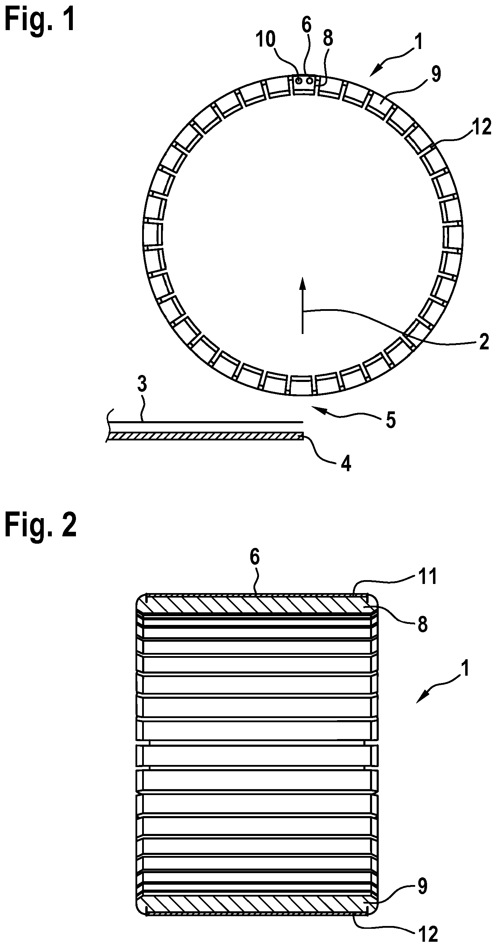

Die Figur 1 zeigt eine Seitenansicht der Maschinenanordnung zur Durchführung des Verfahrens.

Die Karkasstrommel 1 ist schematisch dargestellt und umlaufend nicht, wie bei konventionellen Karkasstrommeln üblich, mit einer Gummimanschette überzogen.

Der Servicer 4 mit der Reifeninnenlage 3 befindet sich zunächst in einer Warteposition. Beim Servicer 4 ist nur das vordere Ende schematisch dargestellt.

Auf der Oberseite des Servicers 4 ist die Reifeninnenlage 3 angeordnet. Das Anlegen der Reifeninnenlage 3 an die Karkasstrommel 1 erfolgt an der Unterseite 5 der Karkasstrommel 1. Die Karkasstrommel 1 wird zunächst so gedreht, dass das Haftungsblech 6 gegenüberliegend vom vorderen Ende der Reifeninnenlage 3 angeordnet ist. Alle Trommelsegmente sind mit einer umlaufenden flexiblen Gummimanschette 12 überdeckt. Nur das Trommelsegment 8 ist über der Gummimanschette 12 mit dem Haftungsblech 6 abgedeckt.

Das Haftungsblech 6 besitzt auf der nach außen gerichteten Oberseite eine glatte MetallOberfläche. Das vordere Ende der Reifeninnenlage 3 wird gegen das Haftungsblech 6 gedrückt. Aufgrund der glatten Oberfläche des Haftungsbleches 6 haftet das vordere Ende mit einer hohen Haftwirkung an dem Haftungsblech.

Anschließend rotiert die Karkasstrommel gegen den Uhrzeigersinn und wickelt dabei die Reifeninnenlage 3 vollständig auf die Karkasstrommel 1 auf. Der Servicer 4 wird anschließend wieder in eine Warteposition zurückverfahren. Nachfolgend werden mit weiteren Servicern weitere Reifenbauteile auf die Karkasstrommel 1 aufgewickelt und dabei schrittweise die Reifenkarkasse vervollständigt.

Vor der Abnahme der Reifenkarkasse von der Karkasstrommel 1 erfolgt ein Einfahren aller Trommelsegmente in radialer Richtung 2, wobei sich der Trommeldurchmesser der Karkasstrommel 1 verkleinert. Die Trommelsegmente weisen auf der Außenseite eine Gummimanschette mit einer Antihaftwirkung gegenüber Gummimaterial auf.

Dadurch wird das Ablösen der Reifeninnenlage von den Trommelsegmenten beim Einfahren der Trommelsegmente wesentlich unterstützt. Die Karkasstrommel weist vorteilhafterweise ca. 24 einzelne Trommelsegmente auf, die gleichmäßig über den Umfang der Karkasstrommel verteilt sind.

Anschließend wird die Reifenkarkasse von der Karkasstrommel 1 abgenommen und zu einer nicht dargestellten Bombiertrommel verfahren. Die Fertigstellung des Fahrzeugreifens erfolgt anschließend mit weiteren Schritten.

Die Fig. 2 zeigt die Karkasstrommel in der Fig. 1 in einer Schnittansicht. Alle Trommelsegmente sind umlaufend mit einer flexiblen Gummimanschette 12 überdeckt. Nur das Trommelsegment 8 ist oberhalb der Gummimanschette 12 mit einem Haftungsblech 6 überdeckt. Das Haftungsblech 6 ist auf beiden Seiten in jeweils einer Nut 11 im Trommelsegment 8 fixiert.

Die Fig. 3 zeigt die Karkasstrommel 1 aus der Fig. 1 in einer dreidimensionalen Ansicht. Das Haftungsblech 6 besitzt eine rechteckförmige Gestalt und überspannt lediglich einen Teilbereich der Gummimanschette 12.

Die Fig. 4 zeigt die Karkasstrommel 1 aus der Fig. 3 in einer Ansicht von vorne. Die gestrichelte Linie 13 soll schematisch den schräg geschnittenen Endabschnitt der Reifeninnenlage 3 darstellen. Das Haftungsblech 6 wird seitlich mit Schrauben 10 am Trommelsegment 8 fixiert.

Die Fig. 5 zeigt eine Karkasstrommel mit einem sechseckförmigen Haftungsblech 7. Dieses Haftungsblech liegt ebenfalls über der Gummimanschette 12 und ist seitlich mit Schrauben am Trommelsegment 8 fixiert.

Die Fig. 6 zeigt die Karkasstrommel aus der Fig. 5 mit dem Haftungsblech 7 in einer Ansicht von vorne. Die Figur zeigt die sechseckförmige Gestalt des Haftungsbleches 7 mit den schrägen Kanten 14. Die schrägen Kanten 14 des Haftungsbleches können beim Auflegen der Reifeninnenlage unter Umständen den schräg abgeschnittenen Endabschnitt der Reifeninnenlage kompensieren.

### Bezugszeichenliste (ist Teil der Beschreibung)

- 1: Karkasstrommel
- 2: Radiale Richtung
- 3: Reifeninnelage
- 4: Servicer für Reifeninnenlage
- 5: Unterseite der Karkasstrommel
- 6: rechteckförmiges Haftungsblech
- 7: sechseckförmiges Haftungsblech
- 8: Trommelsegment für Fixierung des Haltebleches
- 9: einfaches Trommelsegment
- 10: Schrauben für Fixierung des Haltebleches
- 11: Nut für Fixierung des Haltebleches
- 12: Gummimanschette
- 13: schräg abgeschnittener Endabschnitt der Reifeninnenlage
- 14: schräge Kanten des sechseckförmigen Haftungsbleches

## Patentansprüche

1. Verfahren zur Herstellung eines Fahrzeugreifens mit einer Reifenkarkasse, Reifenwülsten mit Kernen, einem Reifengürtel und einem Laufstreifen mit folgenden Schritten:
a) Positionierung einer Karkasstrommel (1) in einer ersten Wickelposition vor einem ersten Servicer (4) zum Auflegen einer Reifeninnenlage (3) an einer Karkass-Station, wobei die Karkasstrommel (1) umlaufend mit einer Vielzahl von einzelnen Trommelsegmenten (8, 9) ausgerüstet ist,
wobei alle Trommelsegemente (8, 9) an der Außenseite mit einer umlaufenden flexiblen Gummimanschette (12) überdeckt sind
und wobei die Außenseite der Gummimanschette (12) in einem schmalen Teilbereich mit mindestens einem Haftungsblech (6, 7) mit einer glatten Oberfläche überdeckt ist, wobei das Haftungsblech an einem der Trommelsegmente (8) montiert ist,
b) Positionierung des vorderen Endes des ersten Servicers (4) mit der Reifeninnenlage (3) an der Karkasstrommel (1),
wobei die Oberseite des Haftungsbleches (6, 7) gegenüberliegend zum vorderen Ende der Reifeninnenlage (3) positioniert wird, ,
c) Andrücken des vorderen Endes der Reifeninnenlage (3) an die Oberseite des Haftungsbleches (6, 7),
wobei das Anhaften der Reifeninnenlage (3) an das Haftungsblech (6, 7) durch die glatte Oberfläche des Haftungsbleches unterstützt wird,
d) Rotieren der Karkasstrommel (1),
wobei das Aufwickeln der Reifeninnenlage (3) mit der Karkasstrommel (1) erfolgt,
e) Positionierung und Zusammensetzen des hinteren Endes der Reifeninnenlage (3) auf die Oberseite des vorderen Endes der Reifeninnenlage auf der Karkasstrommel (1),
f) Aufwickeln von weiteren Reifenbauteilen auf die Karkasstrommel (1),
g) Einfahren aller Trommelsegmente(8, 9) in radialer Richtung,
wobei sich der Trommeldurchmesser der Karkasstrommel verkleinert und
wobei mit den Trommelsegmenten(8, 9) und eine Antihaft-Wirkung der Gummimanschette das Ablösen der Innenseite der Reifeninnenlage von der Außenseite der Gummimanschette unterstützt wird,
h) Abnahme der Reifenkarkasse von der Karkasstrommel (1),
i) Zusammensetzen der Reifenkarkasse mit einem Gürtel-Laufstreifenpaket an einer Bombiertrommel,
j) Fertigstellen des Fahrzeugreifens mit weiteren Schritten.

2. Verfahren nach Anspruch 1,
**dadurch gekennzeichnet, dass**
bei Schritt b) das Anlegen der Reifeninnenlage an der Unterseite (5) der Karkasstrommel (1) erfolgt.

3. Verfahren nach einem der vorhergehenden Ansprüche,
**dadurch gekennzeichnet, dass**
das Haftungsblech (6, 7) in beiden Randbereichen von einem Trommelsegment (8) in jeweils einer Nut fixiert wird.

4. Verfahren nach einem der vorhergehenden Ansprüche,
**dadurch gekennzeichnet, dass**
bei Schritt b) die Reifeninnenlage mit einem schräg geschnittenen Endabschnitt an die Karkasstrommel (1) angelegt wird.

5. Verfahren nach einem der vorhergehenden Ansprüche,
**dadurch gekennzeichnet, dass**
das Haftungsblech (6, 7) in beiden Randbereichen von einem Trommelsegment (8) mit seitlich angeordneten Schrauben (10) fixiert wird.

6. Verfahren nach einem der vorhergehenden Ansprüche,
**dadurch gekennzeichnet, dass**
das Haftungsblech (6) in der Aufsicht im Wesentlichen rechteckförmig ausgebildet ist, wobei das Haftungsblech (6) in Umfangsrichtung der Karkasstrommel (1) im Wesentlichen die gleiche Breite aufweist wie die Breite der Trommelsegmente (8) in Umfangsrichtung der Karkasstrommel (1).

7. Verfahren nach einem der vorhergehenden Ansprüche,
**dadurch gekennzeichnet, dass**
das Haftungsblech (7) in der Aufsicht im Wesentlichen sechseckförmig ausgebildet ist, wobei das Haftungsblech (7) in Umfangsrichtung der Karkasstrommel (1) schräg verlaufende Kanten (14) aufweist.

8. Verfahren nach einem der vorhergehenden Ansprüche,
**dadurch gekennzeichnet, dass**
das Haftungsblech (6, 7) eine Blechdicke von ca. 0,5 bis 1,5 cm aufweist.

## Claims

1. Method for producing a vehicle tyre with a tyre carcass, tyre beads with cores, a tyre belt and a tread, comprising the following steps:
a) positioning a carcass drum (1) in a first winding position ahead of a first servicer (4) for placing a tyre inner ply (3) at a carcass station, wherein the carcass drum (1) is peripherally provided with a multiplicity of individual drum segments (8, 9),
wherein all of the drum segments (8, 9) are covered on the outer side by a peripheral flexible rubber sleeve (12)
and wherein the outer side of the rubber sleeve (12) is covered in a narrow partial region by at least one bonding plate (6, 7) with a smooth surface,
wherein the bonding plate is mounted on one of the drum segments (8),
b) positioning the front end of the first servicer (4) with the tyre inner ply (3) on the carcass drum (1),
wherein the upper side of the bonding plate (6, 7) is positioned opposite the front end of the tyre inner ply (3),
c) pressing the front end of the tyre inner ply (3) against the upper side of the bonding plate (6, 7), wherein the bonding attachment of the tyre inner ply (3) to the bonding plate (6, 7) is assisted by the smooth surface of the bonding plate,
d) rotating the carcass drum (1),
wherein the winding of the tyre inner ply (3) is performed with the carcass drum (1),
e) positioning and putting together the rear end of the tyre inner ply (3) onto the upper side of the front end of the tyre inner ply on the carcass drum (1),
f) winding further tyre components onto the carcass drum (1),
g) moving in all of the drum segments (8, 9) in the radial direction,
wherein the drum diameter of the carcass drum is reduced in size and
wherein the detachment of the inner side of the tyre inner ply from the outer side of the rubber sleeve is assisted by the drum segments (8, 9) and an anti-adhesive effect of the rubber sleeve,
h) removing the tyre carcass from the carcass drum (1),
i) putting together the tyre carcass with a belt-tread assembly on a shaping drum,
j) completing the vehicle tyre by further steps.

2. Method according to Claim 1,
**characterized in that**
in step b) the placing of the tyre inner ply against the underside (5) of the carcass drum (1) is performed.

3. Method according to one of the preceding claims,
**characterized in that**
the bonding plate (6, 7) is fixed in both peripheral regions by a drum segment (8) respectively in a groove.

4. Method according to one of the preceding claims,
**characterized in that**
in step b) the tyre inner ply is placed with an obliquely cut end portion against the carcass drum (1) .

5. Method according to one of the preceding claims,
**characterized in that**
the bonding plate (6, 7) is fixed in both peripheral regions by a drum segment (8) with laterally arranged screws (10).

6. Method according to one of the preceding claims,
**characterized in that**
the bonding plate (6) is formed as substantially rectangular in plan view,
wherein the bonding plate (6) has substantially the same width in the circumferential direction of the carcass drum (1) as the width of the drum segments (8) in the circumferential direction of the carcass drum (1).

7. Method according to one of the preceding claims,
**characterized in that**
the bonding plate (7) is formed as substantially hexagonal in plan view,
wherein the bonding plate (7) has obliquely running edges (14) in the circumferential direction of the carcass drum (1).

8. Method according to one of the preceding claims,
**characterized in that**
the bonding plate (6, 7) has a plate thickness of about 0.5 to 1.5 cm.

## Revendications

1. Procédé de fabrication d'un pneumatique de véhicule comprenant une carcasse de pneumatique, des talons de pneumatique pourvus de noyaux, une ceinture de pneumatique et une bande de roulement, le procédé comprenant les étapes suivantes :
a) positionner un tambour de carcasse (1) dans une première position d'enroulement devant un premier dispositif de service (4) destiné à placer une couche de pneumatique intérieure (3) au niveau d'un poste de carcasse, le tambour de carcasse (1) étant équipé sur la périphérie d'un grand nombre de segments de tambour individuels (8, 9),
tous les segments de tambour (8, 9) étant recouverts du côté extérieur d'un manchon en caoutchouc flexible périphérique (12) et le côté extérieur du manchon en caoutchouc (12) étant recouvert dans une zone partielle étroite d'au moins une plaque adhésive (6, 7) pourvue d'une surface lisse, la plaque adhésive étant montée sur l'un des segments de tambour (8),
b) positionner l'extrémité avant du premier dispositif de service (4) avec la couche de pneumatique intérieure (3) placée sur le tambour de carcasse (1), le côté supérieur de la plaque adhésive (6, 7) étant positionné à l'opposé de l'extrémité avant de la couche de pneumatique intérieure (3),
c) presser l'extrémité avant de la couche de pneumatique intérieure (3) contre le côté supérieur de la plaque adhésive (6, 7), l'adhérence de la couche de pneumatique intérieure (3) à la plaque adhésive (6, 7) étant favorisée par la surface lisse de la plaque adhésive,
d) faire tourner le tambour de carcasse (1), l'enroulement de la couche de pneumatique intérieure (3) étant effectué avec le tambour de carcasse (1),
e) positionner et assembler l'extrémité arrière de la couche de pneumatique intérieure (3) sur le côté supérieur de l'extrémité avant de la couche de pneumatique intérieure placée sur le tambour de carcasse (1),
f) enrouler d'autres composants de pneumatique sur le tambour de carcasse (1),
g) rentrer tous les segments de tambour (8, 9) dans la direction radiale, le diamètre du tambour de carcasse étant réduit et le détachement du côté intérieur de la couche de pneumatique intérieure du côté extérieur du manchon en caoutchouc étant favorisés par les segments de tambour (8, 9) et un effet antiadhésif du manchon en caoutchouc,
h) retirer la carcasse de pneumatique du tambour de carcasse (1),
i) assembler la carcasse de pneumatique avec un ensemble de bande de roulement de nappe d'armature sur un tambour de galbage,
j) finir le pneumatique de véhicule avec des étapes supplémentaires.

2. Procédé selon la revendication 1,
**caractérisé en ce que**
l'application de la couche de pneumatique intérieure sur le côté inférieur (5) du tambour de carcasse (1) est effectuée à l'étape b).

3. Procédé selon l'une des revendications précédentes,
**caractérisé en ce que**
la plaque adhésive (6, 7) est fixée dans les deux zones de bord par un segment de tambour (8) dans une rainure respective.

4. Procédé selon l'une des revendications précédentes,
**caractérisé en ce que**
la couche de pneumatique intérieure pourvue d'une portion d'extrémité coupée obliquement est appliquée sur le tambour de carcasse (1) à l'étape b).

5. Procédé selon l'une des revendications précédentes,
**caractérisé en ce que**
la plaque adhésive (6, 7) est fixée dans les deux zones de bord par un segment de tambour (8) pourvu de vis (10) disposées latéralement.

6. Procédé selon l'une des revendications précédentes,
**caractérisé en ce que**
la plaque adhésive (6) est sensiblement rectangulaire en vue de dessus, la plaque adhésive (6) ayant dans la direction circonférentielle du tambour de carcasse (1) sensiblement la même largeur que la largeur des segments de tambour (8) dans la direction circonférentielle du tambour de carcasse (1).

7. Procédé selon l'une des revendications précédentes,
**caractérisé en ce que**
la plaque adhésive (7) est sensiblement hexagonale en vue de dessus, la plaque adhésive (7) comportant des bords (14) qui s'étendent obliquement dans la direction circonférentielle du tambour de carcasse (1).

8. Procédé selon l'une des revendications précédentes,
**caractérisé en ce que**
la plaque adhésive (6, 7) a une épaisseur d'environ 0,5 à 1,5 cm.
